Europäisches Patentamt

European Patent Office

Office européen des brevets

(11) Veröffentlichungsnummer: **0 295 745 B1**

# EUROPÄISCHE PATENTSCHRIFT

(45) Veröffentlichungstag der Patentschrift: **12.05.93**

(51) Int. Cl.⁵: **C03B 37/018**

(21) Anmeldenummer: **88201185.1**

(22) Anmeldetag: **09.06.88**

(54) **Verfahren zur Herstellung von Lichtleitfasern.**

(30) Priorität: **16.06.87 DE 3720030**

(43) Veröffentlichungstag der Anmeldung:
**21.12.88 Patentblatt 88/51**

(45) Bekanntmachung des Hinweises auf die
Patenterteilung:
**12.05.93 Patentblatt 93/19**

(84) Benannte Vertragsstaaten:
**DE ES FR GB IT NL SE**

(56) Entgegenhaltungen:
**EP−A− 0 132 011      EP−A− 0 187 405**
**EP−A− 0 209 945      GB−A− 2 079 267**
**US−A− 4 314 833      US−E− 30 635**

(73) Patentinhaber: **Philips Patentverwaltung GmbH**
**Wendenstrasse 35 Postfach 10 51 49**
**W−2000 Hamburg 1(DE)**
(84) Benannte Vertragsstaaten:
**DE**

(73) Patentinhaber: **N.V. Philips' Gloeilampenfa−**
**brieken**
**Groenewoudseweg 1**
**NL−5621 BA Eindhoven(NL)**
(84) Benannte Vertragsstaaten:
**ES FR GB IT NL SE**

(72) Erfinder: **Bachmann, Peter, Dr.**
**Karlstrasse 55**
**W−5100 Aachen(DE)**
Erfinder: **Hagemann, Hans−Jürgen, Dr.**
**Arndtstrasse 23**
**W−5100 Aachen(DE)**
Erfinder: **Warnier, Jacques**
**M.L. Kingstraat 18**
**NL−6245 GJ Eijsden(NL)**
Erfinder: **Wilson, Howard**
**Königsberger Strasse 32**
**W−5100 Aachen(DE)**

(74) Vertreter: **Koch, Ingo, Dr.−Ing. et al**
**Philips Patentverwaltung GmbH Wenden−**
**strasse 35 Postfach 10 51 49**
**W−2000 Hamburg 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Lichtleitfasern, bei dem auf der Innenwandung eines auf eine Temperatur zwischen 1100 und 1300°C erwärmten Glasrohrs, schichtweise Glas abgeschieden wird, indem ein reaktives Glasgemisch bei einem Druck zwischen 1 und 30 hPa durch das Glasrohr geleitet wird, während im Inneren des Glasrohrs ein Plasma zwischen zwei Umkehrpunkten hubweise hin- und herbewegt wird, wonach das Glasrohr, nachdem eine dem beabsichtigten Lichtleitfaseraufbau entsprechende Menge Glas abgeschieden worden ist, zum Kollabieren gebracht wird, um eine massive Vorform zu bilden, von der Lichtleitfasern gezogen werden.

Die Herstellung von Lichtleitfasern bzw. optischen Wellenleitern nach dem zuvor angegebenen Verfahren ist u.a. aus US-E-30 635 und US-A 4 314 833 bekannt , wobei die Verfahrensabwandlung, bei der die Glasabscheidung auf einem Glasstab erfolgt, aus US-E-30 635 bekannt ist. Die Herstellungsweise ohne diese Verfahrensabwandlung wird in der Praxis als "nichtisothermes Plasma-CVD-Verfahren" (nichtisothermes PCVD-Verfahren, wobei P = Plasma und CVD = Chemical Vapour Deposition = reaktive Abscheidung aus der Gasphase) bezeichnet. Bei diesem Verfahren werden aus der Gasphase Glasschichten direkt auf der Innenwandung des Glasrohrs abgeschieden (heterogene Reaktion). Hierbei wird die Bildung von Glasruß in der Gasphase vermieden; dies ist insbesondere in US-A-4 314 833 näher beschrieben.

Unter einem Glasrohr und einem Glasstab sind in diesem Zusammenhang ein Substratrohr oder Beschichtungsrohr und ein Stab zu verstehen, die entweder aus synthetisch hergestelltem oder aus aus Quarzkristallen durch Schmelzen hergestelltem amorphem Quarz (Schmelzkieselsäure, Quarzglas) bestehen, wobei das Rohrmaterial gegebenenfalls dotiert ist, oder die sowohl aus synthetisch hergestelltem als auch aus Quarzkristallen durch Schmelzen hergestelltem amorphem Quarz (Schmelzkieselsäure, Quarzglas) bestehen, wobei das Rohrmaterial gegebenenfalls dotiert ist. Das abgeschiedene Glas besteht aus synthetisch hergestelltem amorphem Quarz, der gegebenenfalls dotiert ist.

Mit dem PCVD-Verfahren sind sowohl Gradientenindexfasern als auch Stufenindexfasern oder Fasern mit einem anderen Brechungsindexprofil herstellbar, wobei dem jeweiligen Faseraufbau entsprechende Mengen Glas abgeschieden werden.

Das PCVD-Verfahren zeichnet sich durch Abscheideausbeuten von nahezu 100 % und durch eine hohe Gleichmäßigkeit der abgeschiedenen Glasschichten längs der Abscheidezone aus. Wenn aber die Rate des totalen Gasflusses eine bestimmte Größe überschreitet, z.B. weil höhere Abscheideraten erzielt werden sollen, treten Abweichungen von dar Gleichmäßigkeit der Schichten längs der Rohrachse auf, die die Weiterverarbeitung von Anfangs- und Endbereichen des beschichteten Glasrohres zu Lichtleitfasern verbieten. Solche Bereiche werden als Taper bezeichnet. Sie führen zu Ausbeuteverlusten.

Aus EP-A-0 187 405 und EP-A-0 209 945 ist es bekannt, durch Abbremsung und Beschleunigung des Plasmas und/oder durch Veränderung der zugeführten Mikrowellenleistung im vorderen Teil des Tapers den für die Weiterverarbeitung geeigneten Teil am Anfang des beschichteten Rohres zu vergrößern. Beiden Maßnahmen ist gemeinsam, daß eine Verminderung des geometrischen Tapers aus verfahrensbedingten Gründen zur Erzeugung von optischen Tapern führt. In diesem Zusammenhang ist unter einem geometrischen Taper eine Veränderung der Beschichtungsdicke pro Längeneinheit und unter einem optischen Taper eine Veränderung des Brechungsindexprofils längs des Rohres zu verstehen.

Aufgabe der Erfindung ist es, die Verfahrensausbeute beim PCVD-Verfahren durch Verkürzung des geometrischen Tapers zu erhöhen, ohne daß dadurch optische Taper entstehen.

Diese Aufgabe wird durch die Merkmale des Anspruchs 1 gelöst.

Das zuvor angegebene Verhältnis des Radius $R_o$ des Glasstabs zum Innenradius $R_i$ des Glasrohrs bedeutet, anders ausgedrückt, daß die genannten Radien die Beziehung

$$5 R_o \geq R_i \geq 1{,}5 R_o \qquad (1)$$

erfüllen. Dadurch wird die Taperlänge auf etwa 17 % ($R_i \approx 5 R_o$) bis 5 % ($R_i \approx 1{,}5 R_o$) der Taperlänge ohne Stab reduziert.

Zur weiteren Erhöhung der Verfahrensausbeute ist eine Verminderung des geometrischen und des optischen Tapers insbesondere bei einer Erhöhung der Abscheideraten auf Werte oberhalb 0,5 g/Minute anzustreben, da die Länge der Taper etwa proportional zur Abscheiderate anwächst. Bei Versuchen hat sich gezeigt, daß eine Erhöhung der Verfahrensausbeute durch Anwendung von Rohr/Stab-Kombinationen erreicht wird, wenn die Durchströmrate der reaktiven Gase, gemessen in sccm, auf mindestens das 35-fache der totalen Beschichtungslänge, gemessen in cm, eingestellt wird. Dabei bedeutet sccm Kubikzentimeter pro Minute, bezogen auf Standardbedingungen (273 °K, 1013 hPa).

Das zuvor angegebene Verhältnis von Durchströmrate $Q_T$ zu Beschichtungslänge L bedeutet, anders ausgedrückt, daß für die genannten Größen die Beziehung

$$\frac{Q_T}{sccm} \geqq 35 \frac{L}{cm} \qquad (2)$$

gilt.

Die Beschichtungslänge L liegt typischerweise zwischen 30 cm und 200 cm. Bei Gaszusammensetzungen, die für das PCVD-Verfahren charakteristisch sind, und einer Beschichtungslänge von 100 cm entspricht Gleichung (2) einer Abscheiderate $\dot{m}$ von mehr als etwa 1 g/Minute bis etwa 2 g/Minute, weil

$$\frac{Q_T}{sccm} = 2000 \frac{\dot{m}}{g/Minute} \qquad (3)$$

Die Möglichkeit, im Substratrohr mit Hilfe eines Mikrowellenresonators ein Niederdruckplasma zu erzeugen, wird durch die Anwesenheit eines Glasstabs im Rohr nicht beeinträchtigt. Vielmehr findet eine Abscheidung von dotiertem oder undotiertem Quarzglas sowohl auf der Innenwand des Substratrohrs als auch auf dem Umfang des Stabes statt, der sich im Inneren des Rohres befindet.

Um die Abscheidung zu bewerkstelligen, wird ein reaktives Gasgemisch aus $O_2$, $SiCl_4$ und gasförmigen Dotierungsmitteln wie z.B. $GeCl_4$ oder $C_2F_6$ bei einem Druck zwischen 500 und 2500 Pa durch die Rohr-Stab-Kombination geleitet, während im glasfreien Innenraum zwischen dem Rohr und dem Stab ein Plasma zwischen zwei Umkehrpunkten periodisch hin und her bewegt wird. Die Rohr-Stab-Kombination wird während der Beschichtung auf eine Temperatur zwischen 1300 und 1600 °K erhitzt.

Nachdem auf diese Art schichtweise Glas entsprechend dem beabsichtigten Lichtleitfaseraufbau abgeschieden worden ist, wird der Stab aus dem Substratrohr entfernt und das Rohr alleine wird zu einer massiven Vorform kollabiert, von der eine Lichtleitfaser gezogen wird.

Mit dem erfindungsgemäßen Verfahren sind Fasern mit jedem gewünschten Verlauf des Brechungsindex herstellbar, z.B. Gradientenindex- und Stufenindexfasern mit radialsymmetrischen Brechungsindexprofilen oder mit Profilen, die eine vorgegebene Winkelabhängigkeit des Brechungsindex besitzen.

Die Verkürzung des Tapers mit Hilfe der erfindungsgemäßen Rohr/Stab-Kombination hat gegenüber anderen Verfahren der Taperreduktion den Vorteil, daß alle PCVD-Verfahrensparameter unverändert bleiben können, z.B. ist eine positionsabhängige Veränderung der Bewegungsgeschwindigkeit des Plasmas oder der Plasmaleistung nicht notwendig. Dies hat vorteilhaft zur Folge, daß beim erfindungsgemäßen Verfahren ein zusätzlicher optischer Taper nicht entsteht.

Die vorteilhafte Anwendung der Erfindung ist jedoch nicht auf die Fälle beschränkt, bei denen eine erhöhte Gesamtverfahrensausbeute erreicht wird. Die Rohr/Stab-Kombination ist auch dann von Vorteil, wenn z.B. die totale Beschichtungslänge aus apparativen Gründen nicht vergrößert werden kann, eine möglichst große nutzbare Vorformlänge aber erforderlich oder erwünscht ist.

Die Erfindung wird nachstehend anhand einer Zeichnung und einiger Ausführungsbeispiele näher erläutert. In der Zeichnung zeigen

Fig. 1 ein Diagramm, das optische Vermessungsergebnisse an Vorformen darstellt, und

Fig. 2 ein Diagramm, das die Gesamtverfahrensausbeute als Funktion der Abscheiderate darstellt.

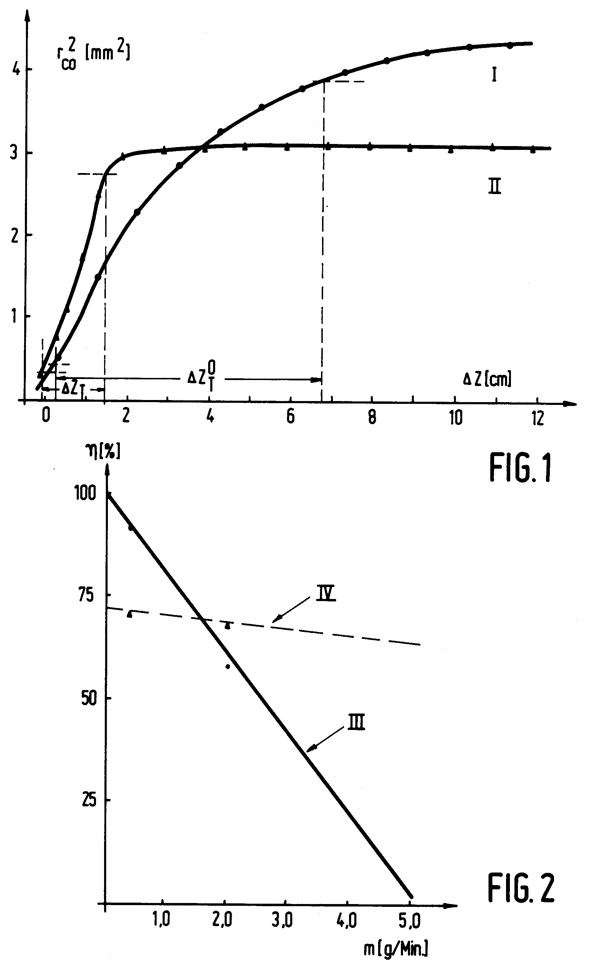

Bei allen Ausführungsbeispielen wurden mit dem PCVD-Verfahren Vorformen mit einem Stufenindexprofil hergestellt. Die Resonatorgeschwindigkeit betrug 12 cm/s auf einer Hublänge von 80 cm. An den Endpunkten wurde der Resonator über eine Länge von etwa 1 cm auf die Geschwindigkeit Null verzögert und in umgekehrter Richtung wieder auf 12 cm/s beschleunigt. Das Verhältnis des $O_2$-Flusses zum Chloridfluß ($SiCl_4$ und $GeCl_4$) betrug 5:1. Der Druck während der Abscheidung wurde auf 1800 Pa eingestellt und die Substrattemperatur betrug 1500 °K. Die Vorformen wurden nach der Abscheidung kollabiert und bezüglich der Geometrie des abgeschiedenen Materials (Radius $r_{co}$ des abgeschiedenen Quarzglases als Funktion der Vorformkoordinate $\Delta Z$; Fig. 1) und der Brechungsindexdifferenz zwischen

EP 0 295 745 B1

dem abgeschiedenen Material und dem $SiO_2$ − Substratrohr vermessen.

Beispiel 1

Die PCVD − Abscheidung bei einer totalen Durchströmrate $Q_T$ von 800 sccm, einer Mikrowellenleistung von 600 W und einer Abscheiderate m von 0,3 g/Minute liefert mit einem Substratrohr von 15 mm Innendurchmesser einen geometrischen Anfangstaper $\Delta Z_T^0$ von 6,75 cm (Fig. 1, Kurve I) bei einer Ausbeute $\eta$ im Plateau von 100 %. Ein zweites Experiment unter denselben Abscheidebedingungen mit einem Quarzstab von 5 mm Durchmesser im Substratrohr ergab einen Taper $\Delta Z_T$ von 1,5 cm und eine Ausbeute $\eta$ von 72 % (Fig. 1, Kurve II). Die Brechungsindexdifferenz des abgeschiedenen Materials zum Substratrohr zeigte bei beiden Experimenten keine Abhängigkeit von der Position entlang der Vorform. Durch die erfindungsgemäße Maßnahme wurde der Taper also um 77 % verkürzt.

Beispiel 2

Die PCVD − Abscheidung bei einer totalen Durchströmrate $Q_T$ von 4200 sccm, einer Mikrowellenleistung von 3,8 kW, einer Beschichtungslänge von 80 cm und einer Abscheiderate $\overset{\bullet}{m}$ von 2 g/Minute liefert mit einem Substratrohr von 22 mm Innendurchmesser einen geometrischen Anfangstaper von 34 cm bei einer Ausbeute im Plateaubereich von etwa 100 %. Unter denselben Abscheidebedingungen mit einem Stab (7 mm Durchmesser) im Substratrohr ergibt sich ein geometrischer Anfangstaper von etwa 7 cm und einer Ausbeute im Plateaubereich von etwa 74 %. Durch die Wirkung des Quarzstabes wird der Taper also um 80 % verkürzt und die Gesamtausbeute $\eta$ des Abscheidungsprozesses von etwa 58 % auf 68 % gesteigert.

Die Prozeßausbeute $\eta$ ist in Fig. 2 graphisch als Funktion der Abscheiderate $\overset{\bullet}{m}$ dargestellt, wobei die Gerade III den Ergebnissen ohne Stab und die Gerade IV denjenigen mit Stab ($R_i/R_o$ = 3) entsprechen. Man erkennt aus Fig. 2 deutlich, daß die erfindungsgemäße Verwendung eines Quarzstabs umso vorteil − hafter wird, je höher die Abscheiderate ist.

**Patentansprüche**

**1.** Verfahren zur Herstellung von Lichtleitfasern mit folgenden Verfahrensschritten:
   - In ein Glasrohr wird koaxial ein Glasstab mit kreisförmigem Querschnitt angeordnet, wobei der Radius des Glasstabes auf höchstens das 0,67 − fache und mindestens das 0,2 − fache des Innenradius des Glasrohrs eingestellt wird,
   - die Innenwandung des Glasrohrs wird auf 1100 bis 1300 ˚C erwärmt,
   - zur schichtweisen Abscheidung von Glas auf der Innenwandung des Glasrohrs wird ein reaktives Glasgemisch bei einem Druck von 1 bis 30 hPa durch den Zwischenraum zwischen dem Glasrohr und dem Glasstab geleitet, wobei
   - im Inneren des Glasrohrs ein Plasma zwischen zwei Umkehrpunkten hin − und herbewegt wird,
   - nach dem Erreichen einer für die Herstellung von Lichtleitfasern ausreichenden Abscheidungsrate auf der Innenwand des Glasrohrs wird der Glasstab aus dem Glasrohr entfernt,
   - das Glasrohr wird danach zu einer massiven Vorform kollabiert,
   - aus der massiven Vorform werden Lichtleitfasern gezogen.

**2.** Verfahren nach Anspruch 1,
dadurch gekennzeichnet, daß die Durchströmrate der reaktiven Gase, gemessen in sccm, auf minde − stens das 35 − fache der totalen Beschichtungslänge, gemessen in cm, eingestellt wird.

**Claims**

**1.** A method of manufacturing optical fibres comprising the following production steps:
   - a glass rod having a circular cross − section is coaxially arranged in a glass tube, the radius of the glass rod being adjusted to at most 0.67 times and at least 0.2 times the inner radius of the glass tube,
   - the inner wall of the glass tube is heated to a temperature of 1100 ˚C to 1300 ˚C,
   - glass is deposited in layers on the inner wall of the glass tube by leading a reactive gas mixture through the interspace between the glass tube and the glass rod at a pressure of 1 to 30 hPa, while
   - inside the glass tube a plasma is reciprocated between two reversal points,

4

- following the deposition of glass on the inner wall of the glass tube in a quantity which enables optical fibres to be manufactured, the glass rod is removed from the glass tube,
- the glass tube is then collapsed to form a solid preform,
- optical fibres are drawn from this solid preform.

2. A method as claimed in Claim 1, characterized in that the rate of flow of the reactive gases, measured in sccm, is adjusted to at least 35 times the overall coating length, measured in cm.

**Revendications**

1. Procédé pour la fabrication de fibres optiques présentant les étapes de procédé suivantes:
   - dans un tube en verre est disposé de façon coaxiale une tige en verre d'une section transversale circulaire, le rayon de la tige en verre étant établi à au maximum 0,67 fois et au minimum 0,2 fois le rayon intérieur du tube en verre,
   - la paroi intérieure du tube en verre est chauffée à 1100 à 1300°C,
   - pour le dépôt par couches de verre sur la paroi intérieure du tube en verre, un mélange gazeux réactif sous une pression de 1 à 30 hPa est guidé à travers l'espace intermédiaire entre le tube en verre et la tige en verre,
   - un plasma est animé d'un mouvement de va−et−vient entre deux points d'inversion dans l'intérieur du tube en verre,
   - après l'obtention d'un taux de dépôt suffisant pour la fabrication de fibres optiques sur la paroi intérieure du tube en verre, la tige en verre est sortie du tube en verre,
   - le tube en verre est ensuite affaissée de façon à obtenir une préforme massive,
   - à partir de la préforme massive sont tirées des fibres optiques.

2. Procédé selon la revendication 1, caractérisé en ce que le taux de passage du gaz réactif, mesuré en sccm, est établi à au moins 35 fois la longueur de recouvrement totale, mesurée en cm.

FIG.1

FIG.2